# EUROPEAN PATENT APPLICATION

(11) **EP 4 446 283 A1**
(43) Date of publication of application: **16.10.2024**
(21) Application number: 22904184.3
(22) Date of filing: 05.12.2022
(51) Int. Cl.: C01F 11/18, C08K 9/04, C08L 75/08, C08L 101/06, C08L 71/02, C09C 1/02

(54) **SURFACE-TREATED CALCIUM CARBONATE AND RESIN COMPOSITION CONTAINING SAME**

(30) Priority: 06.12.2021 JP 2021197489
(71) Applicant: Shiraishi Kogyo Kaisha, Ltd., Osaka-shi, Osaka 530-0005 (JP)
(72) Inventor: SAKAGUCHI, Hiromitsu, Amagasaki City, Hyogo 6600085 (JP); TADOKORO, Yuka, Amagasaki City, Hyogo 6600085 (JP); OSAKABE, Kanehiro, Amagasaki City, Hyogo 6600085 (JP); KAYANO, Yoshisada, Osaka City, Osaka 5300005 (JP)
(74) Representative: Global IP Europe Patentanwaltskanzlei
(86) International application number: PCT/JP2022/044695
(87) International publication number: WO 2023/106255

(57) **Abstract**

The present invention is intended to provide a calcium carbonate that has a controlled shape and a surface treatment amount and can be added to any resin material to give a resin composition having a low viscosity and a high thixotropy. The present invention provides a surface-treated calcium carbonate comprising a calcium carbonate having a primary particle aspect ratio of 2 to 20 as determined with an electron microscope and a surface treating agent containing a sodium salt of a fatty acid or a potassium salt of a fatty acid, and the surface treating agent adheres to the surface of the calcium carbonate. The calcium carbonate has a BET specific surface area of 3 to 13 [m²/g], and the calcium carbonate has a surface coverage of 0.15 to 0.60 [%/(m²/g)] with the surface treating agent per unit BET specific surface area.

## Description

### FIELD

The present invention relates to a surface-treated calcium carbonate and a resin composition comprising the surface-treated calcium carbonate.

### BACKGROUND

Calcium carbonate (CaCO₃) is used as a base material or a loading material of various industrial products and is also widely used in the fields of agriculture and food. Calcium carbonate is applied as an inorganic filler, for example, in paper, rubber, sealing materials, and plastics. For example, calcium carbonate filled in paper can improve the brightness or opacity of the paper, and calcium carbonate added to rubber can improve the mechanical strength or abrasion resistance of the rubber. Calcium carbonate added to a sealing material can control the viscosity or thixotropy of the sealing material, and calcium carbonate added to a plastic can improve the mechanical strength of the plastic or can control the thermal properties of the plastic. To separately produce calcium carbonates each having an intended particle size, an intended BET specific surface area, or an intended crystal shape depending on the application as described above, numerous studies have been conducted.

Patent Literature 1 discloses a thermoplastic resin composition comprising a thermoplastic resin and a calcium carbonate of columnar or acicular aragonite crystals having a minor axis length of 0.01 to 1.5 µm, a major axis length of 0.5 to 20.0 µm, and an aspect ratio of 4 or more. It is disclosed that the aragonite crystalline calcium carbonate used in Patent Literature 1 may be surface-treated with a coupling agent such as a silane compound and a titanium compound, an acrylic acid compound, a fatty acid, or the like, as needed.

### CITATION LIST

### PATENT LITERATURE

Patent Literature 1: JP 1-278566 A

### BRIEF SUMMARY

### TECHNICAL PROBLEM

If a natural product such as wollastonite, which contains giant particles with varying particle sizes, is used as the filler for a polyolefin, a molded article of the resin composition has a poor surface smoothness. Patent Literature 1 therefore discloses using a synthetic aragonite crystalline calcium carbonate having a certain major axis length, a certain minor axis length, and a certain aspect ratio as the inorganic filler. However, a thermoplastic resin composition comprising such a calcium carbonate as disclosed in Patent Literature 1 as the filler is typically likely to have a high viscosity but a low thixotropy, and there is a need for further improvement from the viewpoint of the handling properties of the thermoplastic resin composition.

The present invention is therefore intended to provide a calcium carbonate that has a controlled shape and a surface treatment amount and may be added to any resin material to give a resin composition having a low viscosity and a high thixotropy.

### SOLUTION TO PROBLEM

One aspect of the invention is a surface-treated calcium carbonate comprising:
a calcium carbonate having a primary particle aspect ratio of 2 to 20 as determined with an electron microscope; and
a surface treating agent containing a sodium salt of a fatty acid or a potassium salt of a fatty acid, the surface treating agent adhering to a surface of the calcium carbonate, wherein
the calcium carbonate has a surface coverage of 0.15 to 0.60 [%/(m²/g)] with the surface treating agent per unit BET specific surface area.

It is preferable that the calcium carbonate has a BET specific surface area of 3 to 13 [m²/g].

It is preferable that the calcium carbonate is aragonite crystals.

Another aspect of the invention is a resin composition comprising:
the surface-treated calcium carbonate according to the above-mentioned aspect; and
a polymer having a polypropylene glycol skeleton.

### ADVANTAGEOUS EFFECTS

The present invention provides a calcium carbonate having a certain shape and a certain surface treatment amount and a calcium carbonate-containing resin composition having a low viscosity and a high thixotropy.

### DETAILED DESCRIPTION

Embodiments of the present invention will be described in further detail, but the present invention is not intended to be limited to the following embodiments.

A first embodiment of the present invention is a surface-treated calcium carbonate comprising a calcium carbonate having a primary particle aspect ratio of 2 to 20 as determined with an electron microscope and comprising a surface treating agent containing a sodium salt of a fatty acid or a potassium salt of a fatty acid, and the surface treating agent adheres to the surface of the calcium carbonate. The calcium carbonate has a surface coverage of 0.15 to 0.60 [%/(m²/g)] with the surface treating agent per unit BET specific surface area.

In the embodiment, the calcium carbonate is a carbonate of calcium represented by the composition formula, CaCO₃, and is the main component of seashells, eggshells, limestone, chalk, and the like. Calcium carbonate is classified into heavy calcium carbonate (natural calcium carbonate) prepared by pulverization and classification of limestone and into precipitated calcium carbonate (synthetic calcium carbonate) prepared by chemical reaction, and the calcium carbonate used in the embodiment is precipitated calcium carbonate. Accordingly, the calcium carbonate simply called in the present description means precipitated calcium carbonate (synthetic calcium carbonate) unless otherwise specified. The calcium carbonate may be any of polymorphs such as calcite crystals (trigonal rhombohedral crystals), aragonite crystals (orthorhombic crystals), and vaterite crystals (hexagonal crystals), but is specifically preferably aragonite crystals.

In an embodiment, the calcium carbonate is preferably a surface-treated calcium carbonate having a treated surface. In the present description, the surface-treated calcium carbonate is in the state in which a surface treating agent covers the surface of a calcium carbonate or in the state in which a surface treating agent adheres to at least the surface of a calcium carbonate. The surface treatment of a calcium carbonate may be performed with a surface treating agent containing a substance selected from the group consisting of a fatty acid and derivatives thereof, a resin acid and derivatives thereof, silica, an organic silicon compound, a condensed phosphoric acid, a condensed phosphate, and the like. In the present embodiment, the surface treatment is preferably performed with a surface treating agent containing a metal salt of a fatty acid, specifically containing a sodium salt of a fatty acid or a potassium salt of a fatty acid. Examples of the fatty acid include saturated fatty acids and unsaturated fatty acids each having 6 to 24 carbon atoms, preferably 10 to 20 carbon atoms. Examples of the fatty acid include hexanoic acid (caproic acid), heptanoic acid (enanthic acid), octanoic acid (caprylic acid), nonanoic acid (pelargonic acid), decanoic acid (capric acid), dodecanoic acid (lauric acid), tetradecanoic acid (myristic acid), pentadecanoic acid (pentadecylic acid), hexadecanoic acid (palmitic acid), heptadecanoic acid (margaric acid), octadecanoic acid (stearic acid), icosanoic acid (arachidic acid), docosanoic acid (behenic acid), tetracosanoic acid, oleic acid, linoleic acid, linolenic acid, arachidonic acid, eicosapentaenoic acid, docosahexaenoic acid, myristoleic acid, palmitoleic acid, sapienic acid, eicosenoic acid, and erucic acid. These fatty acids and metal salts thereof may be used singly or in combination of two or more of them.

The surface-treated calcium carbonate in an embodiment is preferably prepared by surface-treating a calcium carbonate having a primary particle aspect ratio of 2 to 20 as determined with an electron microscope. The aspect ratio is the length-width ratio of calcium carbonate primary particles and is, in the present embodiment, the ratio of the major axis length to the minor axis length of calcium carbonate primary particles. The aspect ratio of a calcium carbonate may be determined with an electron microscope. Specifically, the aspect ratio may be determined by analyzing an image observed under an electron microscope. The calcium carbonate used in an embodiment has an aspect ratio of 2 to 10, preferably 2.5 to 8, and more preferably 3 to 7.

A calcium carbonate having a primary particle aspect ratio in a preferred range may be produced, for example, by what is called causticization in which an aqueous sodium carbonate solution is added to a calcium hydroxide slurry (suspension) to prepare a calcium carbonate slurry.

The calcium carbonate preferably has a surface coverage of 0.15 to 0.60 [%/(m²/g)] with a surface treating agent per unit BET specific surface area. The BET specific surface area may be determined as follows: gas molecules (such as nitrogen molecules) having a known adsorbate occupied area are allowed to adsorb to a substance; and the adsorption amount is calculated. The BET specific surface area of a calcium carbonate may be determined in accordance with "Determination of the specific surface area of powders (solids) by gas adsorption-BET method" in the Japanese Industrial Standards, JIS, Z 8830. The calcium carbonate used in the present embodiment has a BET specific surface area of 3 to 13 m²/g, preferably 4 to 10 m²/g, and more preferably 5 to 8 m²/g. The surface coverage (i.e. the surface treatment amount) with a surface treating agent per unit BET specific surface area of a surface-treated calcium carbonate may be determined from a weight reduction after heating (heating loss) and may be determined, for example, by the following procedure: a specified amount of a surface-treated calcium carbonate is weighed; the sample is heated from room temperature with a thermogravimeter (TG) or the like; and the sample is weighed at 200°C and at 500°C. In accordance with the formula: heating loss rate [%] = [{(weight of sample at 200°C [g]) - (weight of sample at 500°C [g])}/(weight of sample at 200°C [g])] × 100, the heating loss rate of a surface-treated calcium carbonate is calculated and is divided by the BET specific surface area describe above, and the surface coverage of the surface-treated calcium carbonate is determined. The surface-treated calcium carbonate in an embodiment is surface-treated such that the calcium carbonate has a surface coverage of 0.15 to 0.60 [%/(m²/g)], preferably 0.20 to 0.45 [%/(m²/g)], and more preferably 0.25 to 0.40 [%/(m²/g)] with a surface treating agent per unit BET specific surface area.

The surface treatment of a calcium carbonate may be appropriately performed by a known method including a method (wet method) in which at least one of the above fatty acids is added to a slurry containing a calcium carbonate and water, and the whole is dehydrated and dried. Specific examples of the method of surface-treating a calcium carbonate with an alkali metal salt of a fatty acid includes the method described below.

A fatty acid is heated in an aqueous alkali metal solution such as an aqueous sodium hydroxide solution and an aqueous potassium hydroxide solution to give an aqueous solution of an alkali metal salt of the fatty acid. Next, to a slurry containing a calcium carbonate and water, the aqueous solution of an alkali metal salt of the fatty acid is added, and the whole is stirred. Accordingly, the alkali metal salt of the fatty acid is allowed to adhere to the surface of the calcium carbonate.

The content of the solid calcium carbonate in a slurry containing a calcium carbonate and water may be appropriately adjusted in consideration of the average particle size of the calcium carbonate, the dispersibility of the calcium carbonate in the slurry, ease of dehydration of the slurry, or the like. Typically, by adjusting the solid content of a slurry to about 2 to 30% by mass, preferably about 5 to 20% by mass, a slurry having an appropriate viscosity is prepared, and this enables appropriate surface treatment of a calcium carbonate. The solid content of a calcium carbonate slurry, the concentration of an alkali metal salt of a fatty acid, the stirring time, the stirring speed, and the like may be adjusted so that the calcium carbonate has a surface coverage of 0.15 to 0.60 [%/(m²/g)] with a surface treating agent per unit BET specific surface area.

The calcium carbonate slurry surface-treated with an alkali metal salt of a fatty acid may be dehydrated, for example, by filter pressing. The drying may be performed, for example, with a box dryer. Through the process, a surface-treated calcium carbonate can be produced.

The surface-treated calcium carbonate in an embodiment may be added to a resin to prepare a resin composition. A second embodiment of the present invention is therefore a resin composition comprising the surface-treated calcium carbonate in the first embodiment and a polymer having a polypropylene glycol skeleton. In the present embodiment, the polymer having a polypropylene glycol skeleton is a homopolymer prepared by polymerizing propylene glycol or a copolymer prepared by copolymerizing propylene glycol with an additional monomer. Examples of the copolymer include polyethylene glycol-polypropylene glycol copolymers, polypropylene glycol-polylactic acid copolymers, silyl-terminated polyether resins (polypropylene glycols having a reactive silyl group at a terminal), and silyl-terminated polyurethane resins (polyurethane resins having a reactive silyl group at a terminal). The polymer having a polypropylene glycol skeleton is specifically used in a sealing material or a caulking material or as a component in an adhesive. For example, by reacting a diisocyanate compound with a diol compound (a polymer having a polypropylene glycol skeleton), a urethane sealing material is produced.

The resin composition as the mixture of a surface-treated calcium carbonate and a polymer having a polypropylene glycol skeleton has problems of viscosity and thixotropy. A resin composition having an excessively high viscosity may slow down the reaction with another compound (for example, a diisocyanate compound), unfortunately. A resin composition having no thixotropy has an excessively high viscosity with respect to shear stress, and thus the workability during application deteriorates, unfortunately. Hence, the resin composition preferably has the lowest viscosity possible and a high thixotropy. The resin composition has a viscosity of 5 to 40 Pa s, preferably 10 to 40 Pa s, as determined with a rotational viscometer (at a rotation rate of 20 rpm) at room temperature (hereinafter called viscosity at 20 rpm). The resin composition has a thixotropic index (TI) (the rate of the viscosity at 2 rpm to the viscosity at 20 rpm) of 4.0 to 7.0, preferably 4.2 to 6.0. The inventors have found that to produce such a resin composition, the shape and the surface treatment amount of the surface-treated calcium carbonate are important. Using a calcium carbonate having a primary particle aspect ratio of 2 to 20 as determined with an electron microscope, that is, using a calcium carbonate including primary particles having a relatively long shape, and setting the surface coverage with a surface treating agent at 0.15 to 0.60 [%/(m²/g)] are important to produce a resin composition that contains a polymer having a polypropylene glycol skeleton and has a low viscosity and a high thixotropy.

### Examples

Examples of the present invention will next be specifically described. Without departing from the scope, the present invention is not limited to the following examples.

### [Synthesis of surface-treated calcium carbonate]

### [Example 1]

First, 370 [kg] of a calcium hydroxide slurry having a solid concentration of 15.0 [%] was prepared and was introduced to a reaction tank equipped with a propeller stirrer. To the slurry, 650 [kg] of an aqueous sodium carbonate solution having a concentration of 14.8 [%] was added over 120 [min] to give a calcium carbonate slurry. During the reaction, the propeller stirrer was operated such that the complete mixing time was 20 [sec] in the reaction tank, and the temperature in the reaction tank was controlled at 50 [°C]. The resulting calcium carbonate was observed under an electron microscope to be acicular aragonite crystals, and the primary particle aspect ratio was determined to be about 10 from an electron micrograph.

The calcium carbonate slurry was adjusted to have a solid content of 10% by mass. To the calcium carbonate slurry, 0.8 parts by mass of a 10% by mass aqueous solution of a mixture of fatty acid sodium salts (Tancal MH, Miyoshi Oil & Fat, a mixture of a laurate, a myristate, a palmitate, a stearate, and an oleate at a mass ratio of 3:2:40:15:30) was added, and the calcium carbonate was surface-treated. Next, the resulting slurry was dehydrated by filter pressing to give a cake having a solid content of 60% by weight. The resulting cake was dried in a dryer to give a surface-treated calcium carbonate. The BET specific surface area was determined with MACSORBHM (Mountech) to be 5.7 [m²/g]. From the heating loss measured with a differential thermal analyser (Thermo plus EVOII, Rigaku), the surface treatment amount was determined to be 0.8 [%]. In other words, a surface-treated calcium carbonate having a surface coverage of 0.15 [%/(m²/g)] per unit specific surface area was produced.

### [Example 2]

The procedure in Example 1 was performed except that the same aqueous solution of the mixture of fatty acid sodium salts as that in Example 1 was added in an amount of 1.0 part by mass, and a surface-treated calcium carbonate having an aspect ratio of 10 and a surface coverage of 0.22 [%/(m²/g)] per unit specific surface area was produced.

### [Example 3]

The procedure in Example 1 was performed except that the same aqueous solution of the mixture of fatty acid sodium salts as that in Example 1 was added in an amount of 2.0 parts by mass, and a surface-treated calcium carbonate having an aspect ratio of 10 and a surface coverage of 0.34 [%/(m²/g)] per unit specific surface area was produced.

### [Example 4]

The procedure in Example 1 was performed except that the same aqueous solution of the mixture of fatty acid sodium salts as that in Example 1 was added in an amount of 2.3 parts by mass, and a surface-treated calcium carbonate having an aspect ratio of 10 and a surface coverage of 0.38 [%/(m²/g)] per unit specific surface area was produced.

### [Example 5]

The procedure in Example 1 was performed except that the same aqueous solution of the mixture of fatty acid sodium salts as that in Example 1 was added in an amount of 2.5 parts by mass, and a surface-treated calcium carbonate having an aspect ratio of 10 and a surface coverage of 0.42 [%/(m²/g)] per unit specific surface area was produced.

### [Example 6]

The procedure in Example 1 was performed except that the aqueous sodium carbonate solution was added over 60 [min] and the complete mixing time was 25 [sec], and a calcium carbonate slurry having a primary particle aspect ratio of 2 was prepared. Next, to the resulting calcium carbonate slurry, 3.0 parts by mass of the same aqueous solution of the mixture of fatty acid sodium salts as that in Example 1 was added to surface-treat the calcium carbonate in a similar manner to that in Example 1. A surface-treated calcium carbonate having an aspect ratio of 2 and a surface coverage of 0.35 [%/(m²/g)] per unit specific surface area was produced.

### [Example 7]

The procedure in Example 1 was performed except that the aqueous sodium carbonate solution was added over 60 [min], and a calcium carbonate slurry having a primary particle aspect ratio of 5 was prepared. Next, to the resulting calcium carbonate slurry, 2.0 parts by mass of the same aqueous solution of the mixture of fatty acid sodium salts as that in Example 1 was added, and the calcium carbonate was surface-treated in a similar manner to that in Example 1. A surface-treated calcium carbonate having an aspect ratio of 5 and a surface coverage of 0.36 [%/(m²/g)] per unit specific surface area was produced.

### [Example 8]

The procedure in Example 1 was performed except that the complete mixing time of the aqueous sodium carbonate solution was 10 [sec], and a calcium carbonate slurry having a primary particle aspect ratio of 15 was prepared. Next, to the resulting calcium carbonate slurry, 1.5 parts by mass of the same aqueous solution of the mixture of fatty acid sodium salts as that in Example 1 was added, and the calcium carbonate was surface-treated in a similar manner to that in Example 1. A surface-treated calcium carbonate having an aspect ratio of 15 and a surface coverage of 0.35 [%/(m²/g)] per unit specific surface area was produced.

### [Comparative Example 1]

A calcium carbonate slurry having a primary particle aspect ratio of 10 was prepared in a similar manner to that in Example 1 and was dehydrated and dried in a similar manner to that in Example 1 without surface treatment, and a calcium carbonate was produced.

### [Comparative Example 2]

The procedure in Example 1 was performed except that the same aqueous solution of the mixture of fatty acid sodium salts as that in Example 1 was added in an amount of 3.0 parts by mass, and a surface-treated calcium carbonate having an aspect ratio of 10 and a surface coverage of 0.65 [%/(m²/g)] per unit specific surface area was produced.

### [Comparative Example 3]

First, 300 [kg] of a calcium hydroxide slurry having a solid concentration of 5 [%] was prepared at a temperature of 15 [°C] and was introduced to a reaction tank equipped with a propeller stirrer. To the reaction tank, carbon dioxide gas was supplied at 100 liter/min for bubbling. The resulting calcium carbonate was observed under an electron microscope to be calcite crystals, and the primary particle aspect ratio was determined to be 1 from an electron micrograph.

To the resulting calcium carbonate slurry, 4.5 parts by mass of the same aqueous solution of the mixture of fatty acid sodium salts as that in Example 1 was added, and the calcium carbonate was surface-treated in a similar manner to that in Example 1. A surface-treated calcium carbonate having an aspect ratio of 1 and a surface coverage of 0.36 [%/(m²/g)] per unit specific surface area was produced.

### [Comparative Example 4]

The procedure in Example 1 was performed except that the aqueous sodium carbonate solution was added over 360 [min] and the complete mixing time was 10 [sec], and a calcium carbonate slurry having a primary particle aspect ratio of 30 was prepared. Next, to the resulting calcium carbonate slurry, 1 part by mass of the same aqueous solution of the mixture of fatty acid sodium salts as that in Example 1 was added, and the calcium carbonate was surface-treated in a similar manner. A surface-treated calcium carbonate having an aspect ratio of 30 and a surface coverage of 0.38 [%/(m²/g)] per unit specific surface area was produced.

### [Comparative Example 5]

The procedure in Example 1 was performed except that the same aqueous solution of the mixture of fatty acid sodium salts as that in Example 1 was added in an amount of 3.6 parts by mass, and a surface-treated calcium carbonate having an aspect ratio of 10, a BET specific surface area of 10.3 m²/g, and a surface coverage of 0.35 [%/(m²/g)] per unit specific surface area was produced.

### [Comparative Example 6]

The procedure in Example 1 was performed except that the same aqueous solution of the mixture of fatty acid sodium salts as that in Example 1 was added in an amount of 5.5 parts by mass, and a surface-treated calcium carbonate having an aspect ratio of 10, a BET specific surface area of 15.2 m²/g, and a surface coverage of 0.35 [%/(m²/g)] per unit specific surface area was produced.

### [Production of resin composition]

First, 50 g of the surface-treated calcium carbonate produced in any of Examples and Comparative Examples and 110 g of a commercially available polypropylene glycol (EXCENOL 3020, AGC) were kneaded to give a resin composition. As for the viscosity of each resin composition, the viscosity at a rotation rate of 2 rpm and the viscosity at a rotation rate of 20 rpm were determined by using a rotational viscometer. The thixotropic index (TI) was calculated as the rate of the viscosity at 2 rpm to the viscosity at 20 rpm (viscosity at 2 rpm/viscosity at 20 rpm). The results of the resin compositions are shown in Table 1 and Table 2.

**[Table 1]**

| Table 1: Resin compositions containing surface-treated calcium carbonates having a constant aspect ratio, varying BET specific surface areas, and varying surface coverages per unit specific surface area | | | | | | | | | | | |
|---|---|---|---|---|---|---|---|---|---|---|---|
| | | unit | Comparative Example 1 | Comparative Example 2 | Comparative Example 5 | Comparative Example 6 | Example 1 | Example 2 | Example 3 | Example 4 | Example 5 |
| Surface-treated calcium carbonate | aspect ratio | - | 10 | 10 | 10 | 10 | 10 | 10 | 10 | 10 | 10 |
| | BET specific surface area | m²/g | 6.0 | 3.5 | 10.3 | 15.2 | 5.7 | 5.0 | 5.0 | 4.6 | 4.5 |
| | surface coverage per unit specific surface area | %/(m²/g) | 0 | 0.65 | 0.35 | 0.35 | 0.15 | 0.22 | 0.34 | 0.38 | 0.42 |
| Resin composition | viscosity (2 rpm) | Pa·s | 8 | 150 | 208 | 245 | 148 | 148 | 125 | 118 | 130 |
| | viscosity (20 rpm) | Pa·s | 5.2 | 40 | 41 | 45 | 28 | 27 | 25 | 20 | 22 |
| | TI | - | 1.5 | 3.8 | 5.1 | 5.4 | 5.3 | 5.5 | 5.0 | 5.9 | 5.9 |
| Evaluation | | | poor | poor | poor | poor | good | good | good | good | good |

**[Table 2]**

| Table 2: Resin compositions containing surface-treated calcium carbonates having a constant surface coverage per unit specific surface area and varying aspect ratios | | | | | | | | |
|---|---|---|---|---|---|---|---|---|
| | | unit | Comparative Example 3 | Example 6 | Example 7 | Example 3 | Example 8 | Comparative Example 4 |
| Surface-treated calcium carbonate | aspect ratio | - | 1 | 2 | 5 | 10 | 15 | 30 |
| | BET specific surface area | m²/g | 10.5 | 8.0 | 4.6 | 5.0 | 3.0 | 2.0 |
| | surface coverage per unit specific surface area | %/(m²/g) | 0.36 | 0.35 | 0.36 | 0.34 | 0.35 | 0.38 |
| Resin composition | viscosity (2 rpm) | Pa·s | 180 | 160 | 130 | 125 | 175 | 110 |
| | viscosity (20 rpm) | Pa·s | 40 | 32 | 30 | 25 | 30 | 50 |
| | TI | - | 4.5 | 5.0 | 4.3 | 5.0 | 5.8 | 2.2 |
| Evaluation | | | poor | good | good | good | good | poor |

A resin composition having a viscosity at 20 rpm of 10 to 39 Pa s and a TI of 4.0 or more was evaluated as "good", and a resin composition having a viscosity at 20 rpm of 40 Pa·s or more and a TI of 4.0 or less was evaluated as "poor". Each resin composition containing the surface-treated calcium carbonate in any of Examples had a low viscosity and a high thixotropy. In contrast, the resin composition containing a surface-treated calcium carbonate not satisfying the scope of the invention had a low thixotropy or had a high thixotropy but a high viscosity at 20 rpm.

## Claims

1. A surface-treated calcium carbonate comprising:
a calcium carbonate having a primary particle aspect ratio of 2 to 20 as determined with an electron microscope; and
a surface treating agent containing a sodium salt of a fatty acid or a potassium salt of a fatty acid, the surface treating agent adhering to a surface of the calcium carbonate, wherein
the calcium carbonate has a BET specific surface area of 3 to 13 [m²/g], and
the calcium carbonate has a surface coverage of 0.15 to 0.60 [%/(m²/g)] with the surface treating agent per unit BET specific surface area.

2. The surface-treated calcium carbonate according to claim 1, wherein the calcium carbonate is aragonite crystals.

3. A resin composition comprising:
the surface-treated calcium carbonate according to claim 1 or 2; and
a polymer having a polypropylene glycol skeleton.
